# EUROPEAN PATENT APPLICATION

(11) **EP 4 310 092 A1**
(43) Date of publication of application: **24.01.2024**
(21) Application number: 22771638.8
(22) Date of filing: 28.02.2022
(51) Int. Cl.: C07F 7/18, H01M 10/0567, H01M 10/052

(54) **NOVEL COMPOUND, AND ADDITIVE, ELECTROLYTE AND LITHIUM SECONDARY BATTERY WHICH COMPRISE SAME**

(30) Priority: 16.03.2021 KR 20210034237
(71) Applicant: Samsung SDI Co., Ltd., Yongin-si, Gyeonggi-do 17084 (KR)
(72) Inventor: PARK, Sang Woo, Yongin-Si Gyeonggi-do 17084 (KR); PARK, Hye Jin, Yongin-Si Gyeonggi-do 17084 (KR); OH, Seung Yeop, Yongin-Si Gyeonggi-do 17084 (KR); WOO, Myung Heui, Yongin-Si Gyeonggi-do 17084 (KR); CHO, Won Seok, Yongin-Si Gyeonggi-do 17084 (KR)
(74) Representative: Gulde & Partner
(86) International application number: PCT/KR2022/002844
(87) International publication number: WO 2022/196972

(57) **Abstract**

Provided are a novel compound, and an additive, an electrolyte and a lithium secondary battery, which include the same. The compound includes: a cyclic sulfonyl group; and a silyl group linked thereto, the silyl group containing an unsaturated hydrocarbon group, and when the compound is used as an additive in an electrolyte for a lithium secondary battery, resistance characteristics during high-temperature storage and low-temperature discharge capacity of a lithium secondary battery may be improved.

## Description

### TECHNICAL FIELD

The present disclosure relates to a novel compound, an electrolyte, and a lithium secondary battery including the same.

### BACKGROUND ART

Lithium secondary batteries are used as power supplies for portable electronic devices such as video cameras, mobile phones, and laptop computers. Rechargeable lithium secondary batteries have a high energy density per unit weight and may be charged at a high speed as compared to existing lead storage batteries, nickel-cadmium batteries, nickel-hydride batteries, nickel-zinc batteries, etc.

Since a lithium secondary battery operates at a high driving voltage, an aqueous electrolyte having high reactivity with lithium cannot be used. An organic electrolyte is generally used as an electrolyte for a lithium secondary battery. The organic electrolyte is prepared by dissolving a lithium salt in an organic solvent. It is preferable that an organic solvent is stable at a high voltage, has high ionic conductivity and high permittivity, and has low viscosity.

However, when an organic electrolyte containing a lithium salt is used as an electrolyte for a lithium secondary battery, lifespan characteristics, long-term durability, and high-temperature stability of the lithium secondary battery may be deteriorated due to side reactions between the negative electrode/positive electrode and the electrolyte.

Accordingly, there is a need for an electrolyte capable of improving resistance during high-temperature storage, thermal stability, and low-temperature discharge capacity of a lithium secondary battery.

### DESCRIPTION OF EMBODIMENTS

### TECHNICAL PROBLEM

An aspect is to provide a novel compound capable of improving resistance characteristics during high-temperature storage, and low-temperature discharge capacity of a lithium secondary battery.

Another aspect is to provide an additive for a lithium secondary battery including the compound.

Still another aspect is to provide an electrolyte for a lithium secondary battery including the compound.

Still another aspect is to provide a lithium secondary battery including the compound.

### SOLUTION TO PROBLEM

According to an aspect, provided is a compound including: a cyclic sulfonyl group; and a silyl group linked thereto, the silyl group containing an unsaturated hydrocarbon group.

According to an example, the compound may be represented by Formula 1 below: 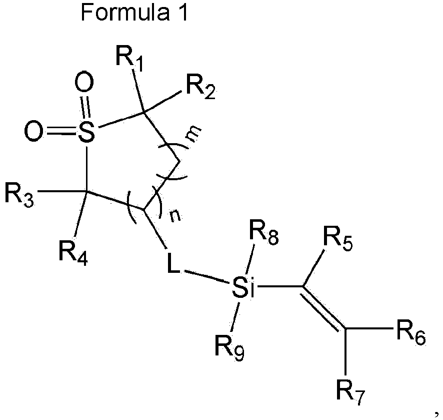
wherein in Formula 1, R₁ to R₉ are each independently selected from hydrogen, deuterium, a fluoro group (-F), a chloro group (-CI), a bromo group (-Br), an iodo group (-I), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₁₀ cycloalkyl group, a substituted or unsubstituted C₂-C₁₀ heterocycloalkyl group, a substituted or unsubstituted C₃-C₁₀ cycloalkenyl group, a substituted or unsubstituted C₂-C₁₀ heterocycloalkenyl group, a substituted or unsubstituted C₆-C₆₀ aryl group, a substituted or unsubstituted C₆-C₆₀ aryloxy group, a substituted or unsubstituted C₆-C₆₀ arylthio group, a substituted or unsubstituted C₂-C₆₀ heteroaryl group, a substituted or unsubstituted monovalent non-aromatic condensed polycyclic group, a substituted or unsubstituted monovalent non-aromatic condensed heteropolycyclic group, -N(Q₁)(Q₂), -Si(Q₃)(Q₄)(Q₅), and -B(Q₆)(Q₇), wherein Q₁ to Q₇ are each independently selected from hydrogen, a C₁-C₆₀ alkyl group, a C₂-C₆₀ alkenyl group, a C₂-C₆₀ alkynyl group, a C₁-C₆₀ alkoxy group, a C₃-C₁₀ cycloalkyl group, a C₂-C₁₀ heterocycloalkyl group, a C₃-C₁₀ cycloalkenyl group, a C₂-C₁₀ heterocycloalkenyl group, a C₆-C₆₀ aryl group, a C₆-C₆₀ aryloxy group, a C₆-C₆₀ arylthio group, a C₂-C₆₀ heteroaryl group, monovalent non-aromatic condensed polycyclic group, and monovalent non-aromatic condensed heteropolycyclic group;
L is selected from O, S, a carbonyl group, a substituted or unsubstituted C₁-C₈ alkylene group, a substituted or unsubstituted C₂-C₈ alkenylene group, a substituted or unsubstituted C₂-C₈ alkynylene group, a substituted or unsubstituted C₁-C₈ heteroalkylene group, a substituted or unsubstituted C₂-C₈ heteroalkenylene group, a substituted or unsubstituted C₂-C₈ heteroalkynylene group, a substituted or unsubstituted C₃-C₈ cycloalkyl group, a substituted or unsubstituted 3- to 10-membered heterocyclo group, a substituted or unsubstituted C₅-C₁₀ aryl group, a substituted or unsubstituted 5- to 10-membered heteroaryl group, or -N(Q₁)-, wherein Q₁ is as described above;
m is 1, 2 or 3; and n is 1, or 2.

According to an aspect, provided is an additive for a lithium secondary battery including the compound.

According to still another aspect, provided is an electrolyte for a lithium secondary battery, including: a lithium salt; an organic solvent; and an additive, wherein the additive includes the compound.

According to still another aspect, provided is a lithium secondary battery including: a positive electrode including a positive active material; a negative electrode including a negative active material; and an electrolyte arranged between the positive electrode and the negative electrode, wherein at least one of the positive electrode, the negative electrode, and the electrolyte includes the compound.

### ADVANTAGEOUS EFFECTS OF DISCLOSURE

A compound according to an embodiment may be used as an additive for a lithium secondary battery, and when the compound is used in an electrolyte for a lithium secondary battery as an additive, resistance characteristics during high-temperature storage, and low-temperature discharge capacity of a lithium secondary battery may be improved.

### BRIEF DESCRIPTION OF DRAWINGS

FIG. 1 shows a schematic diagram of a lithium secondary battery according to an embodiment.
FIG. 2 shows results of evaluating alternating current internal resistance (AC-IR) of coin cells according to Examples 1 to 3 and Comparative Example 1, when the coin cells are stored at a high temperature.
FIG. 3 shows results of measuring internal resistance of coin cells according to Examples 1 to 3 and Comparative Example 1, by using electrochemical impedance spectroscopy (EIS), before the coin cells are stored at a high temperature.
FIG. 4 shows results of measuring internal resistance of coin cells according to Examples 1 to 3 and Comparative Example 1, by using EIS, 4 days after the coin cells are stored at a high temperature.
FIG. 5 shows results of measuring internal resistance of coin cells according to Examples 1 to 3 and Comparative Example 1, by using EIS, 10 days after the coin cells are stored at a high temperature.
FIG. 6 is a result of evaluating low-temperature (-10 °C) discharge characteristics of coin cells according to Examples 2 and 3 and Comparative Example 1.

### MODE OF DISCLOSURE

Hereinafter, an electrolyte for a lithium secondary battery according to example embodiments and a lithium secondary battery including the same will be described in more detail.

A novel compound according to an embodiment includes: a cyclic sulfonyl group; and a silyl group linked thereto, the silyl group containing an unsaturated hydrocarbon group.

In the compound, the cyclic sulfonyl group may suppress a resistance increase rate of a lithium secondary battery during high-temperature storage, and the silyl group containing an unsaturated hydrocarbon group may improve low-temperature discharge characteristics by inducing discharge of a lot of electrons when the lithium secondary battery is discharged at a low temperature. In the compound, a structure of a cyclic sulfonyl group has higher polarity than a linear sulfone structure, and therefore, excellent solubility may be secured without issues of precipitation in an electrolytic solution, and the cyclic sulfonyl group exhibits an effect of improving high temperature performance by being effectively adsorbed on a surface of an electrode plate. In addition, the silyl group in the compound may include at least one unsaturated hydrocarbon group, and reduction polymerization of the unsaturated hydrocarbon group proceeds at an interface of an active material, compared to when there is no unsaturated hydrocarbon group, and therefore, low-temperature lithium ion conductivity may be improved by an effective protective film containing the silyl group.

Accordingly, the compound may simultaneously improve resistance during high-temperature storage, and improve low-temperature discharge capacity, in a lithium ion battery.

According to an example, the compound may be represented by Formula 1 below: 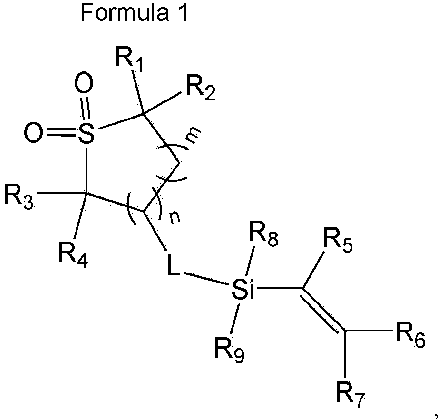 wherein in Formula 1, R₁ to R₉ are each independently selected from hydrogen, deuterium, a fluoro group (-F), a chloro group (-CI), a bromo group (-Br), an iodo group (-I), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₁₀ cycloalkyl group, a substituted or unsubstituted C₂-C₁₀ heterocycloalkyl group, a substituted or unsubstituted C₃-C₁₀ cycloalkenyl group, a substituted or unsubstituted C₂-C₁₀ heterocycloalkenyl group, a substituted or unsubstituted C₆-C₆₀ aryl group, a substituted or unsubstituted C₆-C₆₀ aryloxy group, a substituted or unsubstituted C₆-C₆₀ arylthio group, a substituted or unsubstituted C₂-C₆₀ heteroaryl group, a substituted or unsubstituted monovalent non-aromatic condensed polycyclic group, a substituted or unsubstituted monovalent non-aromatic condensed heteropolycyclic group, -N(Q₁)(Q₂), -Si(Q₃)(Q₄)(Q₅), and -B(Q₆)(Q₇), wherein Q₁ to Q₇ are each independently selected from hydrogen, a C₁-C₆₀ alkyl group, a C₂-C₆₀ alkenyl group, a C₂-C₆₀ alkynyl group, a C₁-C₆₀ alkoxy group, a C₃-C₁₀ cycloalkyl group, a C₂-C₁₀ heterocycloalkyl group, a C₃-C₁₀ cycloalkenyl group, a C₂-C₁₀ heterocycloalkenyl group, a C₆-C₆₀ aryl group, a C₆-C₆₀ aryloxy group, a C₆-C₆₀ arylthio group, a C₂-C₆₀ heteroaryl group, monovalent non-aromatic condensed polycyclic group, and monovalent non-aromatic condensed heteropolycyclic group; L is selected from O, S, a carbonyl group, a substituted or unsubstituted C₁-C₈ alkylene group, a substituted or unsubstituted C₂-C₈ alkenylene group, a substituted or unsubstituted C₂-C₈ alkynylene group, a substituted or unsubstituted C₁-C₈ heteroalkylene group, a substituted or unsubstituted C₂-C₈ heteroalkenylene group, a substituted or unsubstituted C₂-C₈ heteroalkynylene group, a substituted or unsubstituted C₃-C₈ cycloalkyl group, a substituted or unsubstituted 3- to 10-membered heterocyclo group, a substituted or unsubstituted C₅-C₁₀ aryl group, a substituted or unsubstituted 5- to 10-membered heteroaryl group, or -N(Q₁)-, wherein Q₁ is as described above; m is 1, 2 or 3; and n is 1, or 2.

According to an example, in Formula 1, R₁ to R₇ may be each independently selected from hydrogen, deuterium, a fluoro group (-F), a chloro group (-CI), a bromo group (-Br), an iodo group (-I), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₁-C₁₀ alkoxy group; R₈ and R₉ may be each independently selected from a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₁-C₁₀ alkoxy group; L may be selected from O, S, a carbonyl group, a substituted or unsubstituted C₁-C₄ alkylene group, a substituted or unsubstituted C₂-C₄ alkenylene group, a substituted or unsubstituted C₂-C₄ alkynylene group, a substituted or unsubstituted C₁-C₄ heteroalkylene group, a substituted or unsubstituted C₂-C₄ heteroalkenylene group, a substituted or unsubstituted C₂-C₄ heteroalkynylene group, a substituted or unsubstituted C₃-C₆ cycloalkyl group, a substituted or unsubstituted 3- to 10-membered heterocyclo group, a substituted or unsubstituted C₅-C₈ aryl group, a substituted or unsubstituted 5- to 8-membered heteroaryl group, or -N(Q₁)-; and m may be 1; and n may be 1.

According to an example, in Formula 1, R₁ to R₇ may be each independently selected from hydrogen, an unsubstituted C₁-C₈ alkyl group, an unsubstituted C₂-C₈ alkenyl group, an unsubstituted C₂-C₈ alkynyl group, or an unsubstituted C₁-C₈ alkoxy group; R₈ to R₉ may be each independently selected from an unsubstituted C₁-C₈ alkyl group, an unsubstituted C₂-C₈ alkenyl group, an unsubstituted C₂-C₈alkynyl group, or an unsubstituted C₁-C₈ alkoxy group; L may be selected from O, S, a carbonyl group, an unsubstituted C₁-C₄ alkylene group, an unsubstituted C₂-C₄ alkenylene group, an unsubstituted C₂-C₄ alkynylene group, an unsubstituted C₁-C₄ heteroalkylene group, an unsubstituted C₂-C₄ heteroalkenylene group, an unsubstituted C₂-C₄ heteroalkynylene group, or-N(Q₁)-; m may be 1; and n may be 1.

According to an example, the compound may be represented by Formula 2 below: 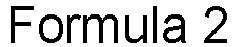 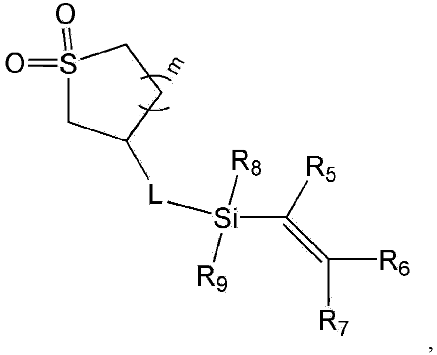 wherein in Formula 2, R₅ to R₇ may be each independently selected from hydrogen, an unsubstituted C₁-C₄ alkyl group, an unsubstituted C₂-C₄ alkenyl group, an unsubstituted C₂-C₄ alkynyl group, or an unsubstituted C₁-C₄ alkoxy group; R₈ and R₉ may be each independently selected from an unsubstituted C₁-C₄ alkyl group, an unsubstituted C₂-C₄ alkenyl group, an unsubstituted C₂-C₄ alkynyl group, or an unsubstituted C₁-C₄ alkoxy group; L may be selected from O, S, a carbonyl group, a substituted or unsubstituted C₁-C₄ alkylene group, a substituted or unsubstituted C₂-C₄ alkenylene group, a substituted or unsubstituted C₂-C₄ alkynylene group, a substituted or unsubstituted C₁-C₄ heteroalkylene group, a substituted or unsubstituted C₂-C₄ heteroalkenylene group, a substituted or unsubstituted C₂-C₄ heteroalkynylene group, a substituted or unsubstituted C₃-C₆ cycloalkyl group, a substituted or unsubstituted 3- to 10-membered heterocyclo group, a substituted or unsubstituted C₅-C₈ aryl group, a substituted or unsubstituted 5- to 8-membered heteroaryl group, or -N(Q₁)-; and m may be 1, 2, or 3.

In R₁ to R₉ in Formula 1 or Formula 2, at least one substituent of the substituted C₁-C₆₀ alkyl group, substituted C₂-C₆₀ alkenyl group, substituted C₂-C₆₀ alkynyl group, substituted C₁-C₆₀ alkoxy group, substituted C₃-C₁₀ cycloalkyl group, substituted C₂-C₁₀ heterocycloalkyl group, substituted C₃-C₁₀ cycloalkenyl group, substituted C₂-C₁₀ heterocycloalkenyl group, substituted C₆-C₆₀ aryl group, substituted C₆-C₆₀ aryloxy group, substituted C₆-C₆₀ arylthio group, substituted C₂-C₆₀ heteroaryl group, substituted monovalent non-aromatic condensed polycyclic group, and substituted monovalent non-aromatic condensed heteropolycyclic group, may be selected from deuterium, -F, -Cl, - Br, -I, a hydroxyl group, a cyano group, a nitro group, a amidino group, a hydrazino group, a hydrazono group, a C₁-C₁₀ alkyl group, a C₂-C₁₀ alkenyl group, a C₂-C_{lO}alkynyl group, and a C₁-C₂₀ alkoxy group.

For example, R₁ to R₉ in Formula 1 may be each independently selected from hydrogen, a methyl group, an ethyl group, a propyl group, an iso-propyl group, a butyl group, an iso-butyl group, a sec-butyl group, a tert-butyl group, -F, -Cl, -Br, -I, a methoxy group, an ethoxy group, an ethenyl group, an isocyanate (-N=C=O) group, and -CF₃ group.

For example, R₁ to R₇ in Formula 1 may be each independently selected from hydrogen, a methyl group, an ethyl group, a propyl group, an iso-propyl group, a butyl group, an iso-butyl group, a sec-butyl group, a tert-butyl group, -F, -Cl, -Br, -I, a methoxy group, an ethoxy group, an ethenyl group, an isocyanate (-N=C=O) group, and -CF₃ group, and R₈ and R₉ may be each independently selected from a methyl group, an ethyl group, a propyl group, an iso-propyl group, a butyl group, an iso-butyl group, a sec-butyl group, a tert-butyl group, and -CF₃ group.

For example, in Formula 1, L may be -O-, -S-, -C(=O)-, -CH₂-, -CHF-, -CF₂-, - C=C-, -O-CH₂-, -CH₂-CH₂-, -CF₂-CF₂-, -O-CH₂-CH₂-, -CH₂-O-CH₂-, -O-CH₂-O-CH₂-, -CF₂-CH₂-CF₂-, -O-CF₂-CH₂-CF₂-, -CH₂-CH₂-CH₂-, -O-CH₂-CH₂-CH₂-, -CF₂-CF₂-CF₂-, -CH₂-CH₂-CH₂-CH₂-, -CF₂-CH₂-CH₂-CF₂-, -CF₂-CF₂-CF₂-CF₂-, -C(CH₃)₂-, -C(C₂H₅)₂-, -C(C₃H₇)₂-, -C(CH₃)₂-C(CH₃)₂-, -CH₂-CH₂-C(CH₃)₂-, -CF₂-CH₂-C(CH₃)₂-, -C(CH₃)₂-CH₂-C(CH₃)₂-, - C(C₆H₅)₂-C(C₆H₅)₂-, -CF₂-CH₂-C(C₆H₅)₂-, or -C(C₆H₅) ₂-CH₂-C(C₆H₅)₂-. For example, L may be -O-, -S-, -C(=O)-, -CH₂-, or -O-CH₂-.

For example, the compound may be a compound represented by Formula 3 below:

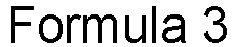

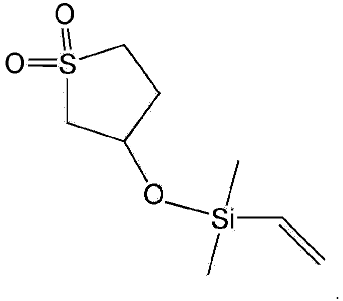

The novel compound according to an embodiment may be used as an additive for a lithium secondary battery. The compound may be included as an additive in at least one of a positive electrode, a negative electrode, and an electrolyte of a lithium secondary battery. In particular, when the compound is used as an additive for an electrolyte for a lithium secondary battery, it is possible to improve characteristics such as resistance during high-temperature storage, thermal stability, and low-temperature discharge capacity of a lithium secondary battery.

An electrolyte for a lithium secondary battery according to an embodiment may include: a lithium salt; an organic solvent; and an additive, wherein the additive may include a cyclic sulfonyl group; and a silyl group linked thereto, the silyl group containing an unsaturated hydrocarbon group.

The electrolyte for a lithium secondary battery may improve characteristics such as resistance during high-temperature storage, thermal stability, and low-temperature discharge capacity of a lithium secondary battery, by including the above-descirbed compound.

Furthermore, the electrolyte for a lithium secondary battery has an excellent effect of suppressing resistance at a high temperature of a lithium secondary battery containing a lithium transition metal oxide, which has a high nickel content, as a positive active material, and thus, a lithium secondary battery with improved lifespan and high temperature stability may be provided.

A lithium secondary battery having high output and high capacity may be manufactured by using a lithium transition metal oxide containing nickel and one or more other transition metals as a positive active material, and having a nickel content of, for example, 80 mol% or more, with respect to the total number of moles of the transition metal. However, a lithium transition metal oxide having a high nickel content has an unstable surface structure, and therefore, gas generation is increased due to side reactions during charging and discharging of a battery and elution of transition metal such as nickel is aggravated. Accordingly, a lithium secondary battery using a lithium transition metal oxide, which has a high nickel content, as a positive active material may have degraded lifespan characteristics and increased resistance at high temperatures, and thus, stability at high temperatures needs to be improved.

An electrolyte for a lithium secondary battery according to an embodiment includes a compound having a cyclic sulfonyl group; and a silyl group linked thereto, the silyl group containing an unsaturated hydrocarbon group, and thus, a solid electrolyte interphase (SEI) film and/or a protective layer having low resistance may be formed, and accordingly, internal resistance of the battery may be reduced. In addition, by significantly reducing an amount of eluted nickel during high-temperature storage, it is possible to resolve the above-described issues and manufacture a lithium secondary battery having improved lifespan and high-temperature stability due to an excellent effect of suppressing resistance at high temperatures.

The compound having a cyclic sulfonyl group; and a silyl group linked thereto, the silyl group containing an unsaturated hydrocarbon group, may be a compound represented by Formula 1 below: 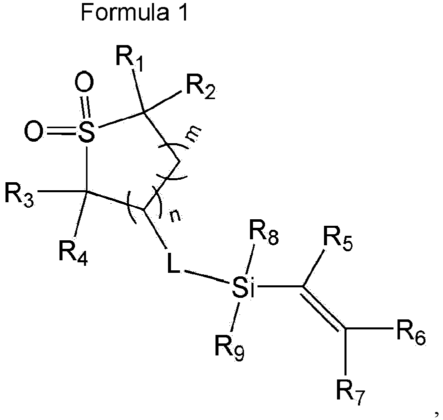 wherein in Formula 1, R₁ to R₉ are each independently selected from hydrogen, deuterium, a fluoro group (-F), a chloro group (-CI), a bromo group (-Br), an iodo group (-I), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₁₀ cycloalkyl group, a substituted or unsubstituted C₂-C₁₀ heterocycloalkyl group, a substituted or unsubstituted C₃-C₁₀ cycloalkenyl group, a substituted or unsubstituted C₂-C₁₀ heterocycloalkenyl group, a substituted or unsubstituted C₆-C₆₀ aryl group, a substituted or unsubstituted C₆-C₆₀ aryloxy group, a substituted or unsubstituted C₆-C₆₀ arylthio group, a substituted or unsubstituted C₂-C₆₀ heteroaryl group, a substituted or unsubstituted monovalent non-aromatic condensed polycyclic group, a substituted or unsubstituted monovalent non-aromatic condensed heteropolycyclic group, -N(Q₁)(Q₂), -Si(Q₃)(Q₄)(Q₅), and -B(Q₆)(Q₇), wherein Q₁ to Q₇ are each independently selected from hydrogen, a C₁-C₆₀ alkyl group, a C₂-C₆₀ alkenyl group, a C₂-C₆₀ alkynyl group, a C₁-C₆₀ alkoxy group, a C₃-C₁₀ cycloalkyl group, a C₂-C₁₀ heterocycloalkyl group, a C₃-C₁₀ cycloalkenyl group, a C₂-C₁₀ heterocycloalkenyl group, a C₆-C₆₀ aryl group, a C₆-C₆₀ aryloxy group, a C₆-C₆₀ arylthio group, a C₂-C₆₀ heteroaryl group, monovalent non-aromatic condensed polycyclic group, and monovalent non-aromatic condensed heteropolycyclic group; L is selected from O, S, a carbonyl group, a substituted or unsubstituted C₁-C₈ alkylene group, a substituted or unsubstituted C₂-C₈ alkenylene group, a substituted or unsubstituted C₁-C₈ alkynylene group, a substituted or unsubstituted C₂-C₈ heteroalkenylene group. a substituted or unsubstituted C₂-C₈ heteroalkenylene group, substituted or unsubstituted C₂-C₈ heteroalkynylene group, a substituted or unsubstituted C₃-C₈ cycloalkyl group, a substituted or unsubstituted 3- to 10-membered heterocyclo group, a substituted or unsubstituted C₅-C₁₀ aryl group, a substituted or unsubstituted 5- to 10-membered heteroaryl group, or -N(Q₁)-, wherein Q₁ is as described above; m is 1, 2 or 3; and n is 1, or 2.

This is as described above.

According to an example, a content of the compound may be in a range of about 0.001 wt% to about 20 wt%, with respect to the total weight of the electrolyte. An upper limit of the content range of the compound may be 20 wt%, with respect to the total weight of the electrolyte, for example, 15 wt%, 10 wt%, 5 wt%, 3 wt%, or 1 wt%. A lower limit of the content range of the compound may be 0.001 wt%, with respect to the total weight of the electrolyte, for example, 0.01 wt%, 0.05 wt%, 0.07 wt%, 0.1 wt%, 0.2 wt%, 0.3 wt%, 0.4 wt%, or 0.5 wt%. Within the above range, it is possible to effectively improve high-temperature storage characteristics and low-temperature discharge capacity of a lithium secondary battery, but a content range is not limited thereto, and may be adjusted within a commonly used range in consideration of combination with other additives, materials used as a positive active material, negative active material, etc.

According to an embodiment, the lithium salt may include at least one selected from the group consisting of LiPF₆, LiBF₄, LiSbF₆, LiAsF₆, LiCIO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (2≤x≤20, and 2≤y≤20), LiCI, Lil, lithium bis(fluorosulfonyl)imide (LiFSI), lithium bis(oxalato)borate (LiBOB), LiPO₂F₂, and compounds represented by Formulas 4 to 7 below, but is not limited thereto, and all that may be used as a lithium salt in the art may be used.

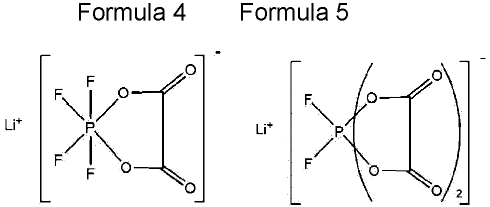

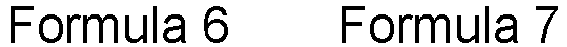

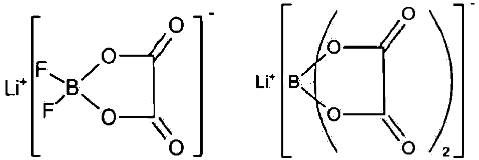

A concentration of the lithium salt in the electrolyte may be about 0.01 M to about 5.0 M, for example, about 0.05 M to about 5.0 M, for example, about 0.1 M to about 5.0 M, for example, about 0.1 M to about 2.0 M. When the concentration of the lithium salt is within the above range, further improved lithium secondary battery characteristics may be obtained.

The organic solvent may be at least one selected from carbonate-based solvents, ester-based solvents, ether-based solvents, and ketone-based solvents.

As a carbonate-based solvent, ethyl methyl carbonate (EMC), methyl propyl carbonate (MPC), ethyl propyl carbonate (EPC), dimethyl carbonate (DMC), diethyl carbonate (DEC), dipropyl carbonate (DPC), propylene carbonate (PC), ethylene carbonate (EC), fluoroethylene carbonate (FEC), vinylene carbonate (VC), vinyl ethylene carbonate (VEC), butylene carbonate (BC), etc. may be used; as an ester-based solvent, methyl propionate, ethyl propionate, propyl propionate, ethyl butyrate, methyl acetate, ethyl acetate, n-propyl acetate, dimethyl acetate, gamma butyrolactone, decanolide, gamma valerolactone, mevalonolactone, caprolactone, etc. may be used; and as an ether-based solvent, dibutyl ether, tetraglyme, diglyme, dimethoxyethane, 2-methyltetrahydrofuran, tetrahydrofuran, etc. may be used; as a ketone-based solvent, cyclohexanone, etc. may be used; and as a nitrile-based solvent, acetonitrile (AN), succinonitrile (SN), adiponitrile, and the like may be used. As other solvents, dimethyl sulfoxide, dimethylformamide, dimethylacetamide, tetrahydrofuran, etc. may be used, but the organic solvent is not necessarily limited thereto, and any solvent that may be used as an organic solvent in the art may be used. For example, the organic solvent may include a mixed solvent of about 50 vol% to about 95 vol% of chain carbonate and about 5 vol% to about 50 vol% of cyclic carbonate, for example, a mixed solvent of about 70 vol% to about 95 vol% of chain carbonate and about 5 vol% to about 30 vol% of cyclic carbonate. For example, the organic solvent may be a mixed solvent of three or more organic solvents.

According to an embodiment, the organic solvent may include at least one selected from the group consisting of ethyl methyl carbonate (EMC), methyl propyl carbonate (MPC), ethyl propyl carbonate (EPC), dimethyl carbonate (DMC), diethyl carbonate (DEC), dipropyl carbonate (DPC), propylene carbonate (PC), ethylene carbonate (EC), fluoroethylene carbonate (FEC), vinylene carbonate (VC), vinyl ethylene carbonate (VEC), butylene carbonate (BC), ethyl propionate, propylpropionate, ethylbutyrate, dimethylsulfoxide, dimethylformamide, dimethylacetamide, gamma-valerolactone, gamma-butyrolactone, and tetrahydrofuran, but is not limited thereto, and any that may be used as an organic solvent in the art may be used.

The electrolyte may be in a liquid or gel state. The electrolyte may be prepared by adding a lithium salt and the aforementioned additive to an organic solvent.

A lithium secondary battery according to another embodiment includes a positive electrode including a positive active material; a negative electrode including a negative active material; and an electrolyte arranged between the positive electrode and the negative electrode, wherein at least one of the positive electrode, the negative electrode, and the electrolyte may include the above-described compound having a cyclic sulfonyl group; and a silyl group linked thereto, the silyl group containing an unsaturated hydrocarbon group. According to an example, at least an electrolyte of a lithium secondary battery may include the compound.

The lithium secondary battery may improve characteristics such as resistance during high-temperature storage, thermal stability, and low-temperature discharge capacity of a lithium secondary battery by including the above-descirbed compound.

A positive active material includes a lithium transition metal oxide containing nickel and other transition metals. In the lithium transition metal oxide including nickel and other transition metals, an amount of nickel may be 60 mol% or more, for example, 75 mol% or more, for example, 80 mol% or more, for example, 85 mol% or more, or for example, 90 mol% or more, with respect to the total number of moles of the transition metal.

For example, the lithium transition metal oxide may be a compound represented by Formula 8 below:

Formula 8 LiₐNiₓCo_{y}M_{z}O_{2-b}A_{b}.

wherein in Formula 8, 1.0≤a≤1.2, 0≤b≤0.2, 0.6≤x<1, 0<y≤0.3, 0<z≤0.3, and x+y+z=1, M is at least one selected from manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B), and A is F, S, Cl, Br, or a combination thereof. For example, it may be 0.7≤x<1, 0<y≤0.3, and 0<z≤0.3; 0.8≤x<1, 0<y≤0.3, and 0<z≤0.3; 0.8≤x<1, 0<y≤0.2, and 0<z≤0.2; 0.83≤x<0.97, 0<y≤0.15, and 0<z≤0.15; or 0.85≤x<0.95, 0<y≤0.1, and 0<z≤0.1.

For example, the lithium transition metal oxide may be at least one compound represented by Formulas 9 and 10 below:

Formula 9 LiNiₓCo_{y}Mn_{z}O₂,

wherein in Formula 9, 0.6≤x≤0.95, 0<y≤0.2, and 0<z≤0.1, for example, 0.7≤x≤0.95, 0<y≤0.3, and 0<z≤0.3,

   Formula 10 LiNiₓCo_{y}Al_{z}O₂,
wherein in Formula 10, 0.6≤x≤0.95, 0<y≤0.2, and 0<z≤0.1, for example, 0.7≤x≤0.95, 0<y≤0.3, and 0<z≤0.3, for example, 0.8≤x≤0.95, 0<y≤0.3, and 0<z≤0.3, for example, 0.82≤x≤0.95, 0<y≤0.15, and 0<z≤0.15, for example, 0.85≤x≤0.95, 0<y≤0.1, and 0<z≤0.1.

For example, the lithium transition metal oxide may be LiNi_{0.6}Co_{0.2}Mn_{0.2}O₂, LiNi_{0.88}Co_{0.08}Mn_{0.04}O₂, LiNi_{0.8}Co_{0.15}Mn_{0.05}O₂, LiNi_{0.8}Co_{0.1}Mn_{0.1}O₂, LiNi_{0.88}Co_{0.1}Mn_{0.02}O₂, LiNi_{0.8}Co_{0.15}Al_{0.05}O₂, LiNi_{0.8}Co_{0.1}Mn_{0.2}O₂, or LiNi_{0.88}Co_{0.1}Al_{0.02}O₂.

According to another embodiment, the positive active material includes at least one active material selected from the group consisting of Li-Ni-Co-Al (NCA), Li-Ni-Co-Mn (NCM), lithium cobalt oxide (LiCoO₂), lithium manganese oxide (LiMnO₂), lithium nickel oxide (LiNiO₂), and lithium iron phosphate (LiFePO₄).

A negative active material may include at least one selected from a silicon-based compound, a carbon-based material, a composite of a silicon-based compound and a carbon-based compound, and silicon oxide (SiOₓ, 0<x<2). The silicon-based compound may be silicon particles, silicon alloy particles, and the like.

A size of the silicon-based compound may be less than 200 nm, for example, about 10 nm to about 150 nm. The term "size" may indicate an average particle diameter when the silicon-based compound is spherical, and may indicate an average long axis length when the silicon particles are non-spherical.

When the size of the silicon-based compound is within the above range, lifespan characteristics are excellent, and thus lifespan of a lithium secondary battery is further improved when the electrolyte according to an embodiment is used.

The carbon-based material may be crystalline carbon, amorphous carbon, or a mixture thereof. The crystalline carbon may be graphite such as non-shaped, plate-like, flake-like, spherical, or fibrous natural graphite or artificial graphite, and the amorphous carbon may be soft carbon (low-temperature calcined carbon), or hard carbon, mesophase pitch carbide, calcined coke, and the like.

The composite of a silicon-based compound and a carbon-based compound may be a composite having a structure in which silicon nanoparticles are arranged on the carbon-based compound, a composite in which silicon particles are included on a surface of and inside the carbon-based compound, and a composite in which silicon particles are coated with the carbon-based compound and are included in the carbon-based compound. In the composite of a silicon-based compound and a carbon-based compound, the carbon-based compound may be graphite, graphene, graphene oxide, or a combination thereof.

The composite of a silicon-based compound and a carbon-based compound may be an active material obtained by dispersing silicon nanoparticles having an average particle diameter of about 200 nm or less on carbon-based compound particles and then coating with carbon, an active material in which silicon (Si) particles are present on and inside graphite, and the like. An average particle diameter of secondary particles of the composite of a silicon-based compound and a carbon-based compound may be about 5 µm to about 20 µm. An average particle diameter of the silicon nanoparticles may be 5 nm or more, for example, 10 nm or more, for example, 20 nm or more, for example, 50 nm or more, for example, 70 nm or more. The average particle diameter of the silicon nanoparticles may be 200 nm or less, 150 nm or less, 100 nm or less, 50 nm or less, 20 nm or less, or 10 nm or less. For example, the average particle diameter of the silicon nanoparticles may be about 100 nm to about 150 nm.

An average particle diameter of secondary particles of the composite of a silicon-based compound and a carbon-based compound may be about 5 µm to about 20 µm, for example, 7 µm to about 15 µm, for example, 10 µm to about 13 µm.

As another example of the composite of a silicon-based compound and a carbon-based compound, a porous silicon composite cluster disclosed in Korean Patent Publication No. 10-2018-0031585, and a porous silicon composite cluster structure disclosed in Korean Patent Publication No. 10-2018-0056395 may be used. Korean Patent Publication No. 10-2018-0031586 and Korean Patent Publication No. 10-2018-0056395 are incorporated herein by reference.

A silicon-carbon-based compound composite according to an embodiment may be a porous silicon composite cluster containing a porous core including porous silicon composite secondary particles, and a shell including second graphene arranged on the core, wherein the porous silicon composite secondary particles include an aggregate of two or more silicon composite primary particles, and the silicon composite primary particles include: silicon; silicon oxide (SiOₓ) (O<x<2) arranged on the silicon; and first graphene arranged on the silicon oxide.

A silicon-carbon-based compound composite according to another embodiment may be a porous silicon composite cluster, including porous silicon composite secondary particles, and second carbon flakes on at least one surface of the porous silicon composite secondary particles; and a porous silicon composite cluster structure, including a carbon-based coating film including amorphous carbon arranged on the porous silicon composite cluster, wherein the porous silicon composite secondary particles include an aggregate of two or more silicon composite primary particles, and the silicon composite primary particles include: silicon; silicon oxide (SiOₓ) (O<x<2) on at least one surface of the silicon; and first carbon flakes on at least one surface of the silicon oxide, and the silicon oxide exists in a form of a film, a matrix, or a combination thereof.

The first carbon flakes and the second carbon flakes may each exist in a form of a film, particle, matrix, or a combination thereof. In addition, the first carbon flakes and the second carbon flakes may each be graphene, graphite, carbon fiber, graphene oxide, or the like.

The above-described composite of a silicon-based compound and a carbon-based compound may be a composite having a structure in which silicon nanoparticles are arranged on the carbon-based compound, a composite in which silicon particles are included on a surface of and inside the carbon-based compound, and a composite in which silicon particles are coated with the carbon-based compound and are included in the carbon-based compound. In the composite of a silicon-based compound and a carbon-based compound, the carbon-based compound may be graphite, graphene, graphene oxide, or a combination thereof.

The lithium secondary battery is not particularly limited in form, and may include a lithium ion battery, a lithium ion polymer battery, a lithium sulfur battery, and the like.

The lithium secondary battery may be prepared by the following method.

First, a positive electrode is prepared.

For example, a positive electrode composition is prepared by mixing a positive active material, a conductive material, a binder, and a solvent. The positive active material composition may be directly coated on a metal current collector to prepare a positive electrode plate. Alternatively, the positive active material composition may be cast on a separate support and then a film separated from the support may be laminated on a metal current collector to prepare a positive electrode plate. The positive electrode is not limited to the forms listed above and may have forms other than the above forms.

The positive active material may be, for example, a metal oxide containing lithium, and any one commonly used in the art may be used without limitation. For example, one or more of a complex oxide of lithium and a metal selected from cobalt, manganese, nickel, and combinations thereof may be used, for specific examples, any compound represented by any one of the following formulas may be used: LiₐA_{1-b}B¹_{b}D¹₂ (wherein 0.90 ≤ a ≤ 1.8, and 0 ≤ b ≤ 0.5); LiₐE_{1-b}B¹_{b}2-_{c}D¹_{c} (wherein 0.90 ≤ a ≤ 1.8, 0 ≤ b ≤ 0.5, and 0 ≤ c ≤ 0.05); LiE_{2-b}B¹_{b}O_{4-c}D¹_{c} (wherein 0 ≤ b ≤ 0.5, and 0 ≤ c ≤ 0.05); Li.Ni_{1-b-c}Co_{b}B¹_{c}D¹_{α} (wherein 0.90 ≤ a ≤ 1.8, 0 ≤ b ≤ 0.5, 0 ≤ c ≤ 0.05, and 0 < α ≤ 2); LiₐNi_{1-b-c}Co_{b}B¹_{c}O_{2-*α*}F¹*_{α}* (wherein 0.90 ≤ a ≤ 1.8, 0 ≤ b ≤ 0.5, 0 ≤ c ≤ 0.05, and 0 < α < 2); LiₐNi_{1-b-c}Co_{b}B¹_{c}O_{2-*α*}F¹₂ (wherein 0.90 ≤ a ≤ 1.8, 0 ≤ b ≤ 0.5, 0 ≤ c ≤ 0.05, and 0 < α < 2); LiₐNi_{1-b-c}Mn_{b}B¹_{c}D*_{α}* (wherein 0.90 ≤ a ≤ 1.8, 0 ≤ b ≤ 0.5, 0 ≤ c ≤ 0.05, and 0 < α ≤ 2); LiₐNi_{1-b-c}Mn_{b}B¹_{c}O_{2-*α*}F¹*_{α}* (wherein 0.90 ≤ a ≤ 1.8, 0 ≤ b ≤ 0.5, 0 ≤ c ≤ 0.05, and 0 < α < 2); LiₐNi_{1-b-c}Mn_{b}B¹_{c}O_{2-*α*}F¹*_{α}* (wherein 0.90 ≤ a ≤ 1.8, 0 ≤ b ≤ 0.5, 0 ≤ c ≤ 0.05, and 0 < α < 2); LiₐNi_{b}E_{c}G_{d}O₂ (wherein 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GeO₂ (wherein 0.90 ≤ a ≤ 1.8, 0 ≤ b ≤ 0.9, 0 ≤ c ≤ 0.5, 0 ≤ d ≤0.5, and 0.001 ≤ e ≤ 0.1); LiₐNiG_{b}O₂ (wherein 0.90 ≤ a ≤ 1.8, and 0.001 ≤ b ≤0.1); LiₐCoG_{b}O₂ (wherein 0.90 ≤ a ≤ 1.8, and 0.001 ≤ b ≤0.1); LiₐMnG_{b}O₂ (wherein 0.90 ≤ a ≤ 1.8, and 0.001 ≤ b ≤0.1);

LiₐMn₂G_{b}O₄ (wherein 0.90 ≤ a ≤ 1.8, and 0.001 ≤ b ≤0.1); QO₂; QS₂; LiQS₂; V₂O₅; LiV₂O₅; LilO₂; LiNiVO₄; Li_{(3-f)}J₂(PO₄)₃(0 ≤ f ≤ 2); Li_{(3-f)}Fe₂(PO₄)₃ (0 ≤ f ≤ 2); and LiFePO₄.

In the formulas, A may be Ni, Co, Mn, or a combination thereof; B¹ may be Al, Ni, Co, Mn, Cr, Fe, Mg, Sr, V, a rare earth element, or a combination thereof; D¹ may be O, F, S, P, or a combination thereof; E may be Co, Mn, or a combination thereof; F¹ may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

For example, LiCoO₂, LiMnₓO₂ₓ (x=1, 2), LiNi₁₋ₓMnₓO₂ₓ(0<x<1), LiNi_{1-x-y}CoₓMn_{y}O₂ (0≤x≤0.5, 0≤y≤0.5), LiFePO₄, etc. may be used.

A compound with a coating layer on a surface of the above-mentioned compound may be used, or a mixture of the above-mentioned compound and the compound with a coating layer may be used. The coating layer may include a compound of a coating element, such as an oxide of a coating element, a hydroxide of a coating element, an oxyhydroxide of a coating element, an oxycarbonate of a coating element, or a hydroxycarbonate of a coating element. Compounds constituting the coating layer may be amorphous or crystalline. As the coating element included in the coating layer, Mg, Al, Co, K, Na, Ca, Si, Ti, V, Sn, Ge, Ga, B, As, Zr, or mixtures thereof may be used. In a process of forming the coating layer, any coating method (for example, spray coating, an immersion method, etc.) may be used as long as the compound may be coated in a way that does not adversely affect physical properties of the positive active material by using these elements, and since this may be well understood by those skilled in the art, a detailed description thereof will be omitted.

Carbon black, graphite fine particles, etc. may be used as the conductive material, but the conductive material is not limited thereto, and any material that may be used as a conductive material in the art may be used.

Examples of the binder include vinylidene fluoride/hexafluoropropylene copolymer, polyvinylidene fluoride (PVDF), polyacrylonitrile, polymethylmethacrylate, polytetrafluoroethylene (PTFE), mixtures thereof, or styrene butadiene rubber-based polymer or the like, but it is not necessarily limited thereto, and any binder used in the art may be used.

N-methylpyrrolidone, acetone, or water may be used as the solvent, but the solvent is not limited thereto, and any solvent that may be used in the art may be used.

Amounts of the positive active material, conductive material, binder, and solvent are levels commonly used in lithium batteries. Depending on an intended use and configuration of the lithium battery, one or more of the conductive material, binder, and solvent may be omitted.

Next, a negative electrode is prepared.

For example, a negative active material composition is prepared by mixing a negative active material, a conductive material, a binder, and a solvent. The negative active material composition may be directly coated on a metal current collector to prepare a negative electrode plate. Alternatively, the negative active material composition may be cast on a separate support and then a film separated from the support may be laminated on a metal current collector to prepare a negative electrode plate.

For the negative active material, any that may be used as a negative active material in the related art may be used. For example, the negative active material may include one or more selected from lithium metals, metals alloyable with lithium, transition metal oxides, non-transition metal oxides, and carbon-based materials.

For example, the metals alloyable with lithium may be Si, Sn, Al, Ge, Pb, Bi, Sb, and Si-Y alloy (Y may be an alkali metal, alkaline earth metal, group 13 element, group 14 element, transition metal, rare earth element, or a combination thereof, and is not Si), Sn-Y alloy (Y may be an alkali metal, alkaline earth metal, group 13 element, group 14 element, transition metal, rare earth element, or a combination thereof, and is not Sn), and the like. The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, or a combination thereof.

For example, the transition metal oxide may be lithium titanium oxide, vanadium oxide, or lithium vanadium oxide.

For example, the non-transition metal oxide may be SnO₂, SiOₓ(0<x<2), etc.

The carbon-based material may be crystalline carbon, amorphous carbon, or a mixture thereof. The crystalline carbon may be graphite such as amorphous, plate-like, flake-like, spherical, or fibrous natural graphite or artificial graphite, and the amorphous carbon may be soft carbon (low-temperature calcined carbon), or hard carbon, mesophase pitch carbide, calcined coke, and the like.

In the negative active material composition, the same conductive material and binder as in the case of the positive active material composition may be used.

Amounts of the negative active material, conductive material, binder, and solvent are levels commonly used in lithium batteries. Depending on an intended use and configuration of the lithium battery, one or more of the conductive material, binder, and solvent may be omitted.

Next, a separator to be inserted between the positive electrode and the negative electrode is prepared.

Depending on an intended use and configuration of the lithium battery, one or more of the conductive material, binder, and solvent may be omitted. A separator having low resistance to ionic movement of an electrolytic solution and excellent impregnation ability for an electrolytic solution may be used. The separator may be, for example, selected from glass fiber, polyester, Teflon, polyethylene, polypropylene, polytetrafluoroethylene (PTFE), or combinations thereof, and may be in a form of a nonwoven or woven fabric. For example, a winding separator such as polyethylene, polypropylene, and the like may be used in a lithium ion cell, and a separator having an excellent impregnation ability for an organic lelectrolytic solution may be used in a lithium ion polymer cell. For example, the separator may be prepared according to the following method.

First, a separator composition is prepared by mixing a polymer resin, a filler, and a solvent. The separator composition may be directly coated on an electrode and dried to form a separator. Alternatively, after the separator composition is casted and dried on a support, a separator film peeled from the support may be stackd on an electrode to form a separator.

The polymer resin used for manufacturing the separator is not particularly limited, and any substance used in a binder of a electrode plate may be used. For example, vinylidene fluoride/hexafluoropropylene copolymer, polyvinylidene fluoride (PVDF), polyacrylonitrile, polymethyl methacrylate, or a mixture thereof, may be used.

In addition, the separator includes, but is not limited to, for example, polyethylene separator (PES), polypropylene separator (PPS), ceramic coated separator (CCS), polymer coated separator (PCS), multi-layer coated separator (MCS), multi-functional separator (MFS), etc., and a combination thereof is also possible.

Next, the above-described electrolytic solution is prepared.

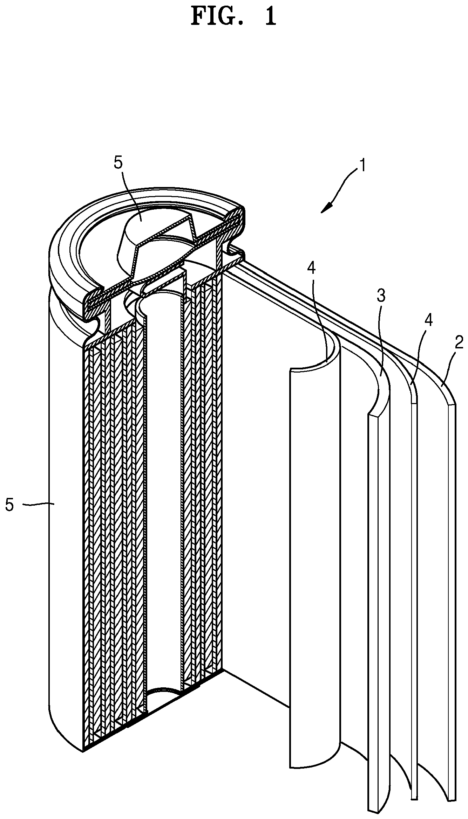

As shown in FIG. 1, the lithium battery 1 includes a positive electrode 3, a negative electrode 2, and a separator 4. The above-described positive electrode 3, negative electrode 2, and separator 4 are wound or folded to be accommodated in the battery case 5. Subsequently, an organic liquid electrolyte is injected into the battery case 5 and sealed with a cap assembly 6 to complete a lithium battery 1. The battery case may be a cylindrical shape, a prismatic shape, or a thin film type. For example, the lithium battery may be a large-sized thin film battery. The lithium battery may be a lithium ion battery.

For a cylindrical battery, an electrode assembly having a cylindrical shape, in which a separator is wound between a positive electrode and a negative electrode, may be formed, inserted into a cylindrical can, and then an electrolytic solution may be injected into the cylindrical can. The cylindrical can may be formed of steel, steel alloy, nickel-plated steel, nickel-plated steel alloy, aluminum, aluminum alloy, or an equivalent material thereof, but the material is not limited thereto. In addition, in the cylindrical can, a beading part recessed inwardly may be formed around a cap assembly at the bottom of the cap assembly to prevent the cap assembly from escaping to the outside, and a crimping part bent inward may be formed on the beading part.

Meanwhile, a plurality of the battery structure, in which a separator is arranged between a positive electrode and a negative electrode, may be stacked to form a battery pack, and such a battery pack may be used in all devices requiring high capacity and high output. For example, the battery pack may be used in laptops, smartphones, electric vehicles, and the like.

A lithium secondary battery according to an embodiment has a significantly reduced direct current internal resistance (DC-IR) increase rate compared to a lithium secondary battery employing a general nickel-rich lithium nickel composite oxide as a positive active material, thereby exhibiting excellent battery characteristics.

An operating voltage of the lithium secondary battery to which the positive electrode, the negative electrode, and the electrolyte are applied may have, for example, a lower limit of about 2.5 V to about 2.8 V and an upper limit of about 4.1 V or more, for example, about 4.1 V to about 4.47 V.

In addition, the lithium secondary battery may be applied to, for example, a power tool that moves by receiving motivity from a motor run by a battery; electric vehicles (EVs) including hybrid electric vehicles (HEVs), plug-in hybrid electric vehicles (PHEVs), and the like; electric two-wheeled vehicles including E-bikes and E-scooters; electric golf carts; power storage systems, and the like, but is not limited thereto.

The term "alkyl group", used herein, means a branched or unbranched aliphatic hydrocarbon group. In an embodiment, an alkyl group may be substituted or unsubstituted. The alkyl group includes a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, etc., but not limited thereto, and each of these may be optionally substituted in another embodiment. In another embodiment, an alkyl group may contain 1 to 6 carbon atoms. For example, a C₁-C₆ alkyl group may include a methyl group, an ethyl group, a propyl group, an isopropyl group, a butyl group, an isobutyl group, a sec-butyl group, a pentyl group, a 3-pentyl group, a hexyl group, and the like, but is not limited thereto.

One or more hydrogen atoms in the alkyl group may be substituted with a halogen atom, a C₁-C₂₀ alkyl group substituted with a halogen atom (for example, CF₃, CHF₂, CH₂F, CCl₃, etc.), a C₁-C₂₀ alkoxy group, a C₂-C₂₀ alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid group or a salt thereof, phosphoric acid or a salt thereof, or a C₁-C₂₀ alkyl group, a C₂-C₂₀ alkenyl group, a C₂-C₂₀ alkynyl group, a C₁-C₂₀ heteroalkyl group, a C₆-C₂₀ aryl group, a C₇-C₂₀ arylalkyl group, a C₆-C₂₀ heteroaryl group, a C₇-C₂₀ heteroarylalkyl group, a C₆-C₂₀ heteroaryloxy group, or a C₆-C₂₀ heteroaryloxyalkyl group.

In the present specification, the term "alkenyl group" refers to a hydrocarbon group including at least one carbon-carbon double bond, and having a carbon number of 2 to 20, and includes an ethenyl group, 1-propenyl group, a 2-propenyl group, a 2-methyl-1-propenyl group, 1-butenyl group, 2-butenyl group, cyclopropenyl group, cyclopentenyl, cyclohexenyl, and the like, but is not limited thereto. In another embodiment, the alkenyl group may be substituted or unsubstituted. In another embodiment, the alkenyl group may have a carbon number of 2 to 40.

In the present specification, the term "alkynyl group" refers to a hydrocarbon group including at least one carbon-carbon triple bond, and having a carbon number of 2 to 20, and includes an ethynyl group, 1-propynyl group, 1-butynyl group, 2-butynyl group, etc., but is not limited thereto. In another embodiment, the alkynyl group may be substituted or unsubstituted. In another embodiment, the alkynyl group may have a carbon number of 2 to 40.

In the present specification, a substituent is derived from an unsubstituted parent group, in which one or more hydrogen atoms are replaced by another atom or functional group. Unless otherwise indicated, when a functional group is considered to be "substituted", it means that the functional group is substituted with one or more substituents independently selected from the group consisting of C₁-C₂₀ alkyl, C₂-C₂₀ alkenyl, C₂-C₂₀ alkynyl, C₁-C₂₀ alkoxy, halogen, a cyano group, a hydroxy group, and a nitro group. When a functional group is described as "optionally substituted", the functional group may be substituted with the substituents described above.

The term "halogen" includes fluorine, bromine, chlorine, iodine, and the like.

"Alkoxy" refers to "alkyl-O-", wherein alkyl is as described above. Examples of the alkoxy group include a methoxy group, an ethoxy group, a 2-propoxy group, a butoxy group, a t-butoxy group, a pentyloxy group, and a hexyloxy group. One or more hydrogen atoms of the alkoxy group may be substituted with the same substituents as in the case of the above-mentioned alkyl group.

"Heteroaryl" means a monocyclic or bicyclic organic group including at least one heteroatom selected from N, O, P, or S, and carbon as the remaining ring atom. The heteroaryl group may include, for example, 1 to 5 heteroatoms, and 5 to 10 ring members. S or N may be oxidized to have various oxidation states.

Examples of heteroaryl include thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5 -yl, isoxazol-3-yl, isoxazol-4-yl, isoxazol-5-yl, 1,2,4-triazol-3-yl, 1,2,4-triazole-5 -yl, 1,2,3-triazol-4-yl, 1,2,3-triazol-5-yl, tetrazolyl, pyrid-2-yl, pyrid-3-yl, 2-pyrazine-2-yl, pyrazin-4-yl, pyrazin-5-yl, 2-pyrimidin-2-yl, 4-pyrimidin-2-yl, or 5-pyrimidin-2-yl.

The term "heteroaryl" includes cases in which a heteroaromatic ring is optionally fused to at least one aryl, cycloaliphatic, or heterocycle.

The term "carbocycle" refers to a saturated or partially unsaturated, non-aromatic monocyclic, bicyclic, or tricyclic hydrocarbon group.

Examples of the monocyclic hydrocarbon include cyclopentyl, cyclopentenyl, cyclohexyl, cyclohexenyl, and the like.

Examples of the bicyclic hydrocarbon include bornyl, decahydronaphthyl, bicyclo[2.1.1]hexyl, bicyclo[2.1.1]heptyl, bicyclo[2.2.1]heptenyl, or bicyclo[2.2.2]octyl.

Examples of the tricyclic hydrocarbon include adamantyl, and the like.

One or more hydrogen atoms of the carbocycle may be substituted with the same substituents as in the case of the above-mentioned alkyl group.

The present disclosure is explained in more detail through the following examples and comparative examples. However, the examples are for exemplifying the present disclosure, and the scope of the present disclosure is not limited thereto.

### (Preparation Example 1)

The final Compound 2 was prepared through the following synthesis process:

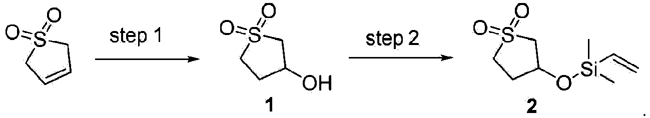

### Synthesis of Compound 1:

3-Sulfolene (5 g, 42.2 mmol) and potassium hydroxide (2.6 g, 46.6 mmol) were dissolved in 8 ml of distilled water, and heated and stirred for about 5 hours at 40 °C. After cooling the reaction mixture to room temperature, the solution was neutralized with concentrated aqueous hydrochloric acid. Potassium chloride salt was removed by filtration and the filtrate was concentrated. The obtained crude product was dissolved in a small amount of acetone, passed through silica gel with ethyl acetate as a developing solution, and then concentrated, to obtain a white solid (Compound 1).

### Synthesis of Compound 2:

After dissolving Compound 1 (1 g, 7.34 mmol) in methylene chloride (20 ml), triethylamine (0.82 g, 8.08 mmol) was added, and the solution was cooled to 0 °C . After slowly adding chlorodimethylvinylsilane (0.93 g, 7.71 mmol) dropwise to the above solution, reaction was proceeded for 2 hours, and the formed precipitate was filtered, and the filtered solution was concentrated. The concentrated liquid was distilled under reduced pressure to obtain Compound 2 in a clear liquid state.

### (Preparation of coin cell)

### Example 1

After adding 1.5 M of LiPF₆ to a mixed solvent in which a volume ratio of ethylene carbonate (EC), propylene carbonate (PC), ethyl propionate (EP), and propyl propionate (PP) is 10:15:30:45, 0.1 wt% of Compound 2 synthesized in Preparation Example 1, with respect to the total weight of the electrolyte, was added to prepare an electrolyte for a lithium secondary battery.

97 wt% of LCO as a positive active material, 0.5 wt% of artificial graphite power as conductive materials and 0.8 wt% of carbon black as conductive materials, and 1.7 wt% of polyvinylidene fluoride (PVDF) were put into N-methyl-2-pyrrolidone, and was stirred for 4 hours by using a mechanical stirrer to prepare positive active material slurry. The slurry was uniformly applied on a 12 µm thick aluminum current collector by using a coater and dried with hot air at 100 °C. Then the dried product was roll-pressed to prepare a positive electrode.

As a negative active material, 98 wt% of artificial graphite, 1 wt% of styrenebutadiene rubber (SBR), and 1 wt% of carboxymethyl cellulose (CMC) were mixed and dispersed in water to prepare negative active material slurry. The slurry was uniformly applied on a 10 µm thick copper current collector in a continuous manner by using a coater, and dried with hot air at 100 °C. Then the dried product was roll-pressed to prepare a negative electrode.

A coin cell was prepared by using the prepared positive and negative electrodes, a 14 µm thick polyethylene separator, and the electrolyte.

### Example 2

A lithium secondary battery was prepared in the same manner as in Example 1, except that 0.5 wt% of Compound 2 synthesized in Preparation Example 1 was added.

### Example 3

A coin cell was prepared in the same manner as in Example 1, except that 1.0 wt% of Compound 2 synthesized in Preparation Example 1 was added.

### Comparative Example 1

A coin cell was prepared in the same manner as in Example 1, except that an electrolyte, into which Compound 2 synthesized in Preparation Example 1 was not added, was used.

### (Evaluation Example)

### Evaluation Example 1: Evaluation of AC internal resistance (AC-IR) during high-temperature (60 °C) storage

Coin cells prepared in Examples 1 to 3 and Comparative Example 1 were charged to a state of charge (SOC) of 100 % (fully charged, when a battery is charged/discharged at 3.0 V to 4.47 V, and when total charge capacity of the battery is set to 100 %, the battery is charged to have charge capacity of 100 %), under conditions of constant current charging at 0.2 C until the voltage reaches 4.47 V-constant voltage charging, and cut-off at 0.02 C, and then the batteries were stored at 60 °C for 10 days.

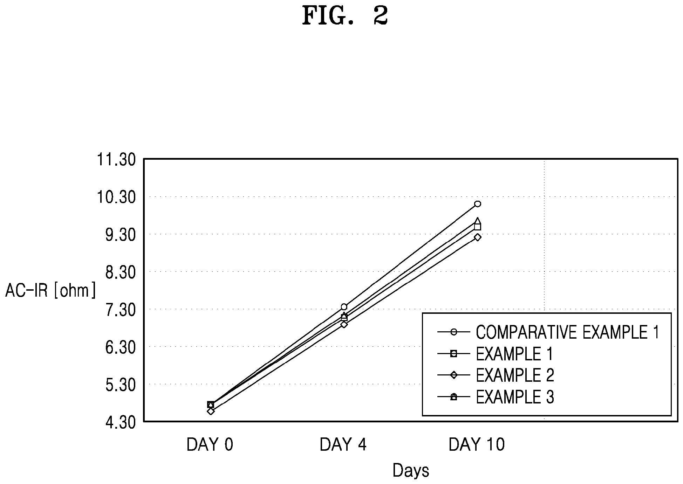

For the coin cells before storage at 60 °C (at Day 0), initial alternating current internal resistance (AC-IR, mΩ) was measured, and results of measuring AC-IR after 4 days (Day 4) and 10 days (Day 10), and AC-IR increase rates are shown in Table 1 and FIG. 2 below.

**[Table 1]**

| | Initial (Day 0) AC-IR (mΩ) | After 4 days of storage AC-IR (mΩ) | After 10 days of storage AC-IR (mΩ) | AC-IR increase rate (Day 10/Day 0) (%) |
|---|---|---|---|---|
| Comparative Example 1 | 4.745 | 7.370 | 10.110 | 213.1 % |
| Example 1 | 4.767 | 7.070 | 9.490 | 199.1 % |
| Example 2 | 4.582 | 6.890 | 9.220 | 201.2 % |
| Example 3 | 4.716 | 7.145 | 9.650 | 204.6 % |

As shown in Table 1 and FIG. 2, it may be seen that the coin cells of Examples 1 to 3 have decreased AC-IR values, and a reduced AC-IR increase rate during high-temperature storage at 60 °C, by including Compound 2 synthesized in Preparation Example 1 in the electrolyte, compared to the case not including Compound 2. The initial resistance and AC-IR increase rate were the lowest when 0.5 wt% of Compound 2 was contained.

### Evaluation Example 2: Evaluation of resistance during storage at high temperature (60 °C) by using EIS

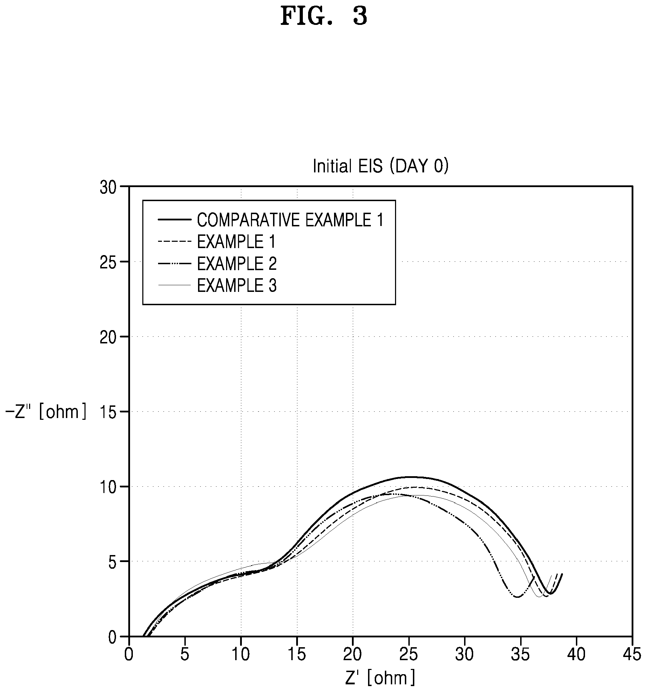

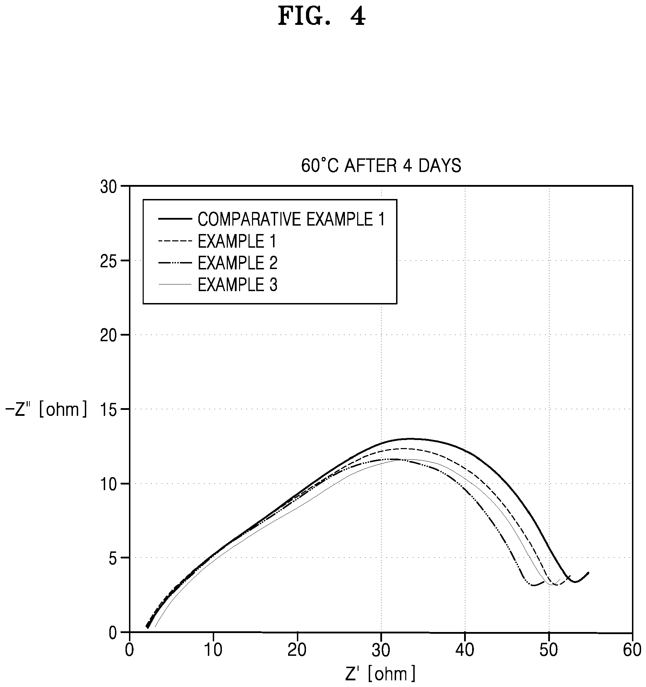

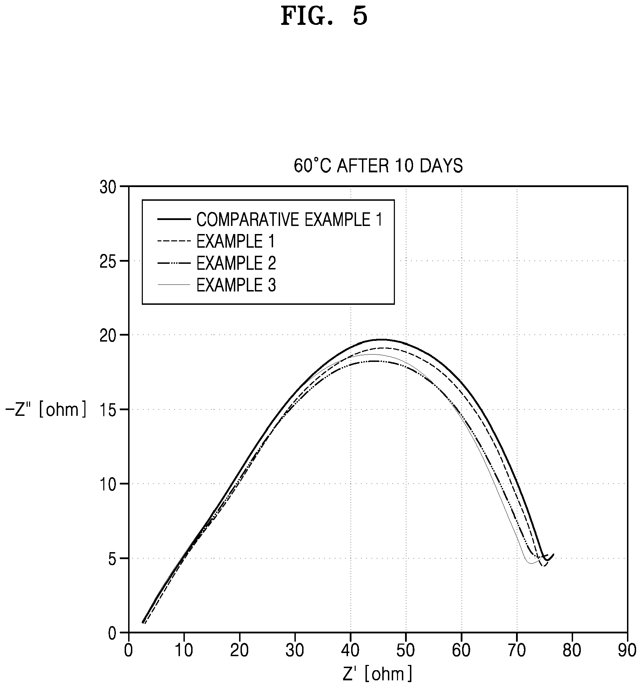

The coin cells manufactured in Examples 1 to 3 and Comparative Example 1 were stored at a high temperature of 60 °C for 10 days in the same manner as in Evaluation Example 1, and internal resistance was measured by using electrochemical impedance spectroscopy (EIS), before storage (Day 0), 4 days after storage (Day 0), and 10 days after storage(Day 10). The results are respectively shown in FIGS. 3 to 5.

The smaller the radius of the curve, the smaller the internal resistance, and as shown in FIGS. 3 to 5, it may be seen that the coin cells of Examples 1 to 3 have reduced internal resistance during high temperature storage, compared to the case in which Compound 2 is not included, by including Compound 2 synthesized in Preparation Example 1 in the electrolyte. When 0.5 wt% of Compound 2 was included, the smallest resistance was shown.

### Evaluation Example 3: Evaluation of low- temperature (-10 °C) discharge characteristics

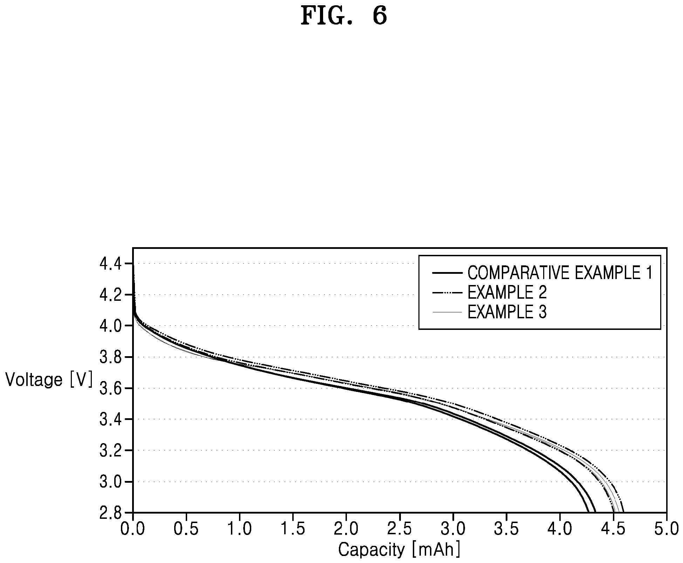

For the coin cells manufactured in Examples 2 and 3 and Comparative Example 1, a process of charging at 0.1 C to 4.47 V and then discharging at 0.1 C was performed once at room temperature (25 °C), and a process of charging at 0.2 C and then discharging at 0.2 C was repeated three times for stabilization, and then, a process of charging at 0.5 C to 4.47 V and then discharging at 0.5 C was repeated once. The coin cells that have undergone the above processes were charged at 0.5 C to 4.47 V, at room temperature (25 °C), then stored in a low-temperature incubator (LH-CTC1, Neuronfit, Korea) at -10 °C for 2 hours, and a process of discharging at 0.2 C was performed once, to measure low-temperature discharge capacities of the coin cells, and the results are shown in Table 1 and FIG. 6 below. For each cell, the low-temperature discharge capacity was measured twice.

**[Table 2]**

| -10 °C 0.2 C DCH | Number of evaluations | 25 °C 0.2 C | 0.2 C 3.4 V | |
|---|---|---|---|---|
| DOE | | Capacity [mAh] | Capacity [mAh] | [%] |
| Comparative Example 1 | 1 | 5.01 | 3.13 | 62.4 % |
| | 2 | 4.92 | 3.08 | 62.5 % |
| Example 2 | 1 | 5.13 | 3.43 | 66.8 % |
| | 2 | 5.03 | 3.29 | 65.6 % |
| Example 3 | 1 | 5.08 | 3.31 | 65.2 % |
| | 2 | 5.09 | 3.33 | 65.4 % |

As shown in Table 2 and FIG. 6, the coin cells of Examples 2 and 3 showed a smaller decrease of low-temperature discharge capacity compared to the coin cell of Comparative Example 1, indicating that discharge characteristics at a low temperature were improved.

Hitherto embodiments have been described with reference to drawings and examples, but these are only illustrative, and those skilled in the art will be able to understand that various modifications and equivalent other embodiments are possible therefrom. Therefore, the scope of the present disclosure should be defined by the appended claims.

### [Explanation of reference numerals]

1: Lithium secondary battery; 2: Negative electrode;
3 Positive electrode; 4 Separator;
5 Battery Case 6 Cap Assembly

## Claims

1. A compound comprising: a cyclic sulfonyl group; and a silyl group linked thereto, the silyl group containing an unsaturated hydrocarbon group.

2. The compound of claim 1, wherein the compound is represented by Formula 1 below: 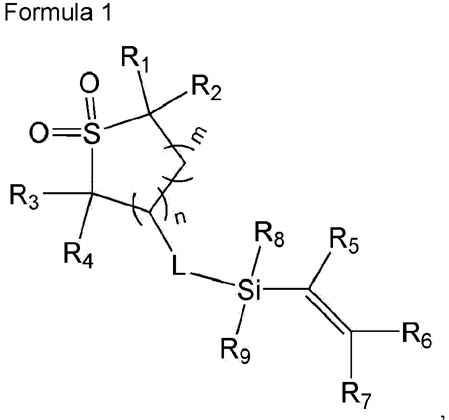 wherein in Formula 1, R₁ to R₉ are each independently selected from hydrogen, deuterium, a fluoro group (-F), a chloro group (-CI), a bromo group (-Br), an iodo group (-I), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₁₀ cycloalkyl group, a substituted or unsubstituted C₂-C₁₀ heterocycloalkyl group, a substituted or unsubstituted C₃-C₁₀ cycloalkenyl group, a substituted or unsubstituted C₂-C₁₀ heterocycloalkenyl group, a substituted or unsubstituted C₆-C₆₀ aryl group, a substituted or unsubstituted C₆-C₆₀ aryloxy group, a substituted or unsubstituted C₆-C₆₀ arylthio group, a substituted or unsubstituted C₂-C₆₀ heteroaryl group, a substituted or unsubstituted monovalent non-aromatic condensed polycyclic group, a substituted or unsubstituted monovalent non-aromatic condensed heteropolycyclic group, -N(Q₁)(Q₂), -Si(Q₃)(Q₄)(Q₅), and -B(Q₆)(Q₇), wherein Q₁ to Q₇ are each independently selected from hydrogen, a C₁-C₆₀ alkyl group, a C₂-C₆₀ alkenyl group, a C₂-C₆₀ alkynyl group, a C₁-C₆₀ alkoxy group, a C₃-C₁₀ cycloalkyl group, a C₂-C₁₀ heterocycloalkyl group, a C₃-C₁₀ cycloalkenyl group, a C₂-C₁₀ heterocycloalkenyl group, a C₆-C₆₀ aryl group, a C₆-C₆₀ aryloxy group, a C₆-C₆₀ arylthio group, a C₂-C₆₀ heteroaryl group, a monovalent non-aromatic condensed polycyclic group, and a monovalent non-aromatic condensed heteropolycyclic group; L is selected from O, S, a carbonyl group, a substituted or unsubstituted C₁-C₈ alkylene group, a substituted or unsubstituted C₂-C₈ alkenylene group, a substituted or unsubstituted C₁-C₈ alkynylene group, a substituted or unsubstituted C₂-C₈ heteroalkenylene group, a substituted or unsubstituted C₂-C₈ heteroalkenylene group, a substituted or unsubstituted C₂-C₈ heteroalkynylene group, a substituted or unsubstituted C₃-C₈ cycloalkyl group, a substituted or unsubstituted 3- to 10-membered heterocyclo group, a substituted or unsubstituted C₅-C₁₀ aryl group, a substituted or unsubstituted 5- to 10-membered heteroaryl group, or -N(Q₁)-, wherein Q₁ is as described above; m is 1, 2 or 3; and is 1 or 2.

3. The compound of claim 2, wherein R₁ to R₇ are each independently selected from hydrogen, deuterium, a fluoro group (-F), a chloro group (-CI), a bromo group (-Br), an iodo group (-I), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₁-C₁₀ alkoxy group; R₈ and R₉ are each independently selected from a substituted or unsubstituted C₁-C₁₀ alkyl group, a substituted or unsubstituted C₂-C₁₀ alkenyl group, a substituted or unsubstituted C₂-C₁₀ alkynyl group, or a substituted or unsubstituted C₁-C₁₀ alkoxy group; L is selected from O, S, a carbonyl group, a substituted or unsubstituted C₁-C₄ alkylene group, a substituted or unsubstituted C₂-C₄ alkenylene group, a substituted or unsubstituted C₂-C₄ alkynylene group, a substituted or unsubstituted C₁-C₄ heteroalkylene group, a substituted or unsubstituted C₂-C₄ heteroalkenylene group, a substituted or unsubstituted C₂-C₄ heteroalkynylene group, a substituted or unsubstituted C₃-C₆ cycloalkyl group, a substituted or unsubstituted 3- to 10-membered heterocyclo group, a substituted or unsubstituted C₅-C₈ aryl group, a substituted or unsubstituted 5- to 8-membered heteroaryl group, or -N(Q₁)-; m is 1; and n is 1.

4. The compound of claim 2, wherein R₁ to R₇ are each independently selected from hydrogen, an unsubstituted C₁-C₈ alkyl group, an unsubstituted C₂-C₈ alkenyl group, an unsubstituted C₂-C₈ alkynyl group, or an unsubstituted C₁-C₈ alkoxy group; R₈ to R₉ are each independently selected from an unsubstituted C₁-C₈ alkyl group, an unsubstituted C₂-C₈ alkenyl group, an unsubstituted C₂-C₈ alkynyl group, or an unsubstituted C₁-C₈ alkoxy group; L is selected from O, S, a carbonyl group, an unsubstituted C₁-C₄ alkylene group, an unsubstituted C₂-C₄ alkenylene group, an unsubstituted C₂-C₄ alkynylene group, an unsubstituted C₁-C₄ heteroalkylene group, an unsubstituted C₂-C₄ heteroalkenylene group, an unsubstituted C₂-C₄ heteroalkynylene group, or -N(Q₁)-; m is 1; and n is 1.

5. The compound of claim 2, wherein the compound is represented by Formula 2 below: 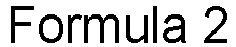 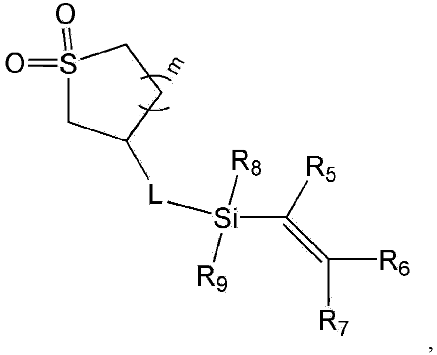 wherein in Formula 2, R₅ to R₇ are each independently selected from hydrogen, an unsubstituted C₁-C₄ alkyl group, an unsubstituted C₂-C₄ alkenyl group, an unsubstituted C₂-C₄ alkynyl group, or an unsubstituted C₁-C₄ alkoxy group; R₈ and R₉ are each independently selected from an unsubstituted C₁-C₄ alkyl group, an unsubstituted C₂-C₄ alkenyl group, an unsubstituted C₂-C₄ alkynyl group, or an unsubstituted C₁-C₄ alkoxy group; L is selected from O, S, a carbonyl group, a substituted or unsubstituted C₁-C₄ alkylene group, a substituted or unsubstituted C₂-C₄ alkenylene group, a substituted or unsubstituted C₂-C₄ alkynylene group, a substituted or unsubstituted C₁-C₄ heteroalkylene group, a substituted or unsubstituted C₂-C₄ heteroalkenylene group, a substituted or unsubstituted C₂-C₄ heteroalkynylene group, a substituted or unsubstituted C₃-C₆ cycloalkyl group, a substituted or unsubstituted 3- to 10-membered heterocyclo group, a substituted or unsubstituted C₅-C₈ aryl group, a substituted or unsubstituted 5- to 8-membered heteroaryl group, or -N(Q₁)-; and m is 1, 2, or 3.

6. The compound of claim 1, wherein the compound is represented by Formula 3 below:

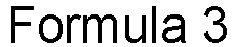

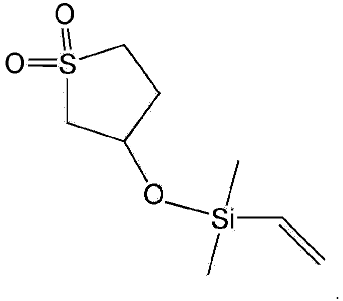

7. An additive for a lithium secondary battery, comprising a compound according to any one of claims 1 to 6.

8. An electrolyte for a lithium secondary battery, comprising: a lithium salt; an organic solvent; and an additive, wherein the additive comprises a compound according to any one of claims 1 to 6.

9. The electrolyte of claim 8, wherein a content of the compound is in a range of about 0.001 wt% to about 20 wt%, with respect to the total weight of the electrolyte.

10. The electrolyte of claim 8, wherein the lithium salt includes at least one selected from the group consisting of LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+i}SO₂) (2≤x≤20, and 2≤y≤20), LiCI, Lil, lithium bis(fluorosulfonyl)imide (LiFSI), lithium bis(oxalato)borate (LiBOB), LiPO₂F₂, and compounds represented by Formulas 4 to 7 below:

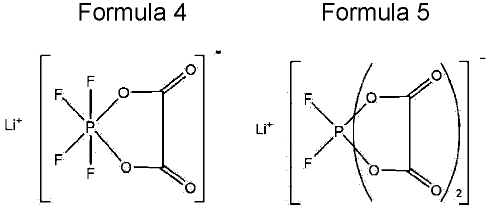

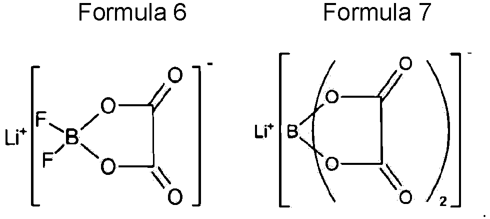

11. A lithium secondary battery comprising: a positive electrode including a positive active material; a negative electrode including a negative active material; and an electrolyte arranged between the positive electrode and the negative electrode, wherein at least one of the positive electrode, the negative electrode, and the electrolyte comprises a compound according to any one of claims 1 to 6.

12. The lithium secondary battery of claim 11, wherein the electrolyte comprises the compound.
